# EUROPEAN PATENT APPLICATION

(11) **EP 4 752 115 A1**
(43) Date of publication of application: **03.06.2026**
(21) Application number: 25216137.7
(22) Date of filing: 17.11.2025
(51) Int. Cl.: C03B 37/028, C03C 13/04, G02B 6/04

(54) **METHODS FOR PRODUCING GLASS STRAND AND GLASS YARN**

(30) Priority: 28.11.2024 JP 2024207643
(71) Applicant: Shin-Etsu Chemical Co., Ltd., Chiyoda-ku Tokyo 100-0005 (JP)
(72) Inventor: Kazuaki, Uranaka, Annaka-shi, Gunma (JP); Yuta, Takahashi, Annaka-shi, Gunma (JP); Yusuke, Taguchi, Annaka-shi Gunma (JP); Ryunosuke, Nomura, Annaka-shi Gunma (JP)
(74) Representative: Schicker, Silvia

(57) **Abstract**

A method for producing a glass strand, the method including: (1) a drawing step of drawing raw filaments composed of a glass composition containing SiO₂ in a compositional amount of 90% by mass or more into glass fibers under conditions of a melting temperature of 1,500 to 3,500°C and a tension of 0.1 to 1.0 cN per filament; and (2) a bundling step of bundling 30 to 400 of the glass fibers obtained in the drawing step to produce a glass strand. This can provide a method for producing a glass strand in which the occurrence of thread breakage during drawing into glass fibers is reduced, and a method for producing a glass yarn in which the occurrence of thread breakage or fuzzing during thread twisting is reduced and a variation in quality is small between the beginning part and end part of winding in a long-length glass yarn.

## Description

### TECHNICAL FIELD

The present invention relates to methods for producing a glass strand and a glass yarn.

### BACKGROUND ART

In recent years, with the spread of fifth generation mobile communication systems (5G) and the advancement of development and production of IoT devices, highly functional printed wiring boards capable of responding to higher-speed information processing and higher-frequency communications have been demanded. Therefore, for glass cloth for printed wiring boards, those having low dielectric loss capable of suppressing signal degradation to a greater extent have been required.

Compared with general glass fibers, glass fibers having a higher SiO₂ content are known to be superior in dielectric characteristics. In particular, quartz glass fibers composed of SiO₂ and having high purity have very small dielectric loss because both dielectric constant and dielectric tangent are small, and are expected to be increasingly used as glass cloth for printed wiring boards.

Patent Document 1 proposes a method for producing quartz glass fibers by heating and drawing with a mixed flame of oxygen and hydrogen, and Patent Document 2 proposes a method of heating and drawing by irradiation with laser light.

However, although quartz glass fibers are rigid and brittle materials and fuzzing and thread breakage are more likely to occur as compared with E glass fibers and the like, Patent Documents 1 and 2 do not disclose this point, and suppression of fuzz and improvement in weavability still remain issues. In particular, in long-length glass yarns of 100 km or more, a variation in quality between the beginning part and end part of winding has been a problem.

### CITATION LIST

### PATENT LITERATURE

Patent Document 1: JP 2006-282401 A
Patent Document 2: JP 2022-173836 A

### SUMMARY OF INVENTION

### TECHNICAL PROBLEM

The present invention has been made in view of the above circumstances, and an object thereof is to provide a method for producing a glass strand in which the occurrence of thread breakage during drawing into glass fibers is reduced, and a method for producing a glass yarn in which the occurrence of thread breakage or fuzzing during thread twisting is reduced and a variation in quality is small between the beginning part and end part of winding in a long-length glass yarn.

### SOLUTION TO PROBLEM

In order to solve the issues described above, the present invention provides
a method for producing a glass strand, the method comprising:
(1) a drawing step of drawing raw filaments composed of a glass composition containing SiO₂ in a compositional amount of 90% by mass or more into glass fibers under conditions of a melting temperature of 1,500 to 3,500°C and a tension of 0.1 to 1.0 cN per filament; and (2) a bundling step of bundling 30 to 400 of the glass fibers obtained in the drawing step to produce a glass strand.

According to the method for producing a glass strand of the present invention, by the drawing into glass fibers under conditions of a melting temperature of 1,500 to 3,500°C and a tension of 0.1 to 1.0 cN per filament, it is possible to provide a method for producing a glass strand in which the occurrence of thread breakage during drawing into glass fibers is reduced.

It is also preferable to use quartz glass containing SiO₂ in a compositional amount of 99% by mass or more as the glass composition.

It is preferable to use such a glass composition as the glass composition.

It is also preferable to set a method for melting the raw filaments composed of a glass composition to a method using any one selected from a burner flame, laser light, and an electric furnace.

It is preferable to set a method for melting the raw filaments composed of a glass composition to such a melting method.

It is also preferable to use, as a fuel gas for the burner flame, a mixed gas of hydrogen, oxygen, and nitrogen in which a mixing ratio of the mixed gas is hydrogen:oxygen = 1:1 to 3:1 and nitrogen is 1 or less based on 1 of oxygen.

It is preferable to use such a fuel gas as a fuel gas for the burner flame.

It is also possible to use, as a laser source for the laser light, one selected from carbonic acid gas type, YAG type, Nd/glass, Nd/vanadate, diode, fiber, disk, HeCd, copper vapor laser, iodine laser, argon laser, krypton laser, and chemical laser.

It is preferable to use such a laser source as a laser source for the laser light.

It is also possible to use, as a material of a heating element of the electric furnace, one selected from platinum, molybdenum, tantalum, tungsten, molybdenum disilicide, lanthanum chromite, and carbon graphite.

It is preferable that the material of a heating element of the electric furnace is such a material.

Furthermore, the present invention provides a method for producing a glass yarn, the method comprising a twisting step of using a glass strand produced by the above method, wherein the number of twists is set to 0.1 to 5 twists per 25 mm.

The method for producing a glass yarn can produce a glass yarn in which the occurrence of thread breakage during thread twisting is reduced and the occurrence of fuzz is reduced.

Furthermore, the present invention provides the method for producing a glass yarn, wherein the method comprises a winding step of winding the glass yarn obtained in the twisting step onto a bobbin, wherein a length of the glass yarn is set to 100 km or more.

The method for producing a glass yarn can produce a long-length glass yarn with stable quality.

### ADVANTAGEOUS EFFECTS OF INVENTION

As described above, the method for producing a glass strand of the present invention can provide a glass strand that is excellent in drawability, in which the occurrence of thread breakage during drawing into glass fibers is reduced. The glass strand produced by the above method can be used to provide a method for producing a glass yarn in which the occurrence of thread breakage or fuzzing during thread twisting is reduced and a variation in quality is small.

### DESCRIPTION OF EMBODIMENTS

As described above, there has been a demand for the development of a method for producing a glass strand in which the occurrence of thread breakage during drawing into glass fibers is reduced, and a method for producing a glass yarn in which the occurrence of thread breakage or fuzzing is reduced and a variation in quality is small between the beginning part and end part of winding in a long-length glass yarn.

As a result of diligent studies on the above issues, the present inventors have found that, according to a method for producing a glass strand in which the conditions in the drawing step of drawing into glass fibers are set to a melting temperature of 1,500 to 3,500°C and a tension of 0.1 to 1.0 cN per filament, winding tightening during the drawing step is suppressed and the occurrence of thread breakage during drawing into glass fibers can be reduced. They have also found that, according to a method for producing a glass yarn using the glass strand produced by the above method, the occurrence of thread breakage or fuzzing during thread twisting is suppressed, and in particular, it is possible to obtain a glass yarn in which a variation in quality is small between the beginning part and end part of winding in a long-length glass yarn of 100 km or more, thereby completing the present invention.

That is, the present invention is
a method for producing a glass strand, the method including:
(1) a drawing step of drawing raw filaments composed of a glass composition containing SiO₂ in a compositional amount of 90% by mass or more into glass fibers under conditions of a melting temperature of 1,500 to 3,500°C and a tension of 0.1 to 1.0 cN per filament; and (2) a bundling step of bundling 30 to 400 of the glass fibers obtained in the drawing step to produce a glass strand.

In addition, the present invention is a method for producing a glass yarn, the method including a twisting step of using a glass strand produced by the method described above, wherein the number of twists is set to 0.1 to 5 twists per 25 mm.

Hereinafter, the present invention will be described in detail, but the present invention is not limited to the description below.

### [Method for Producing Glass Strand]

### (1) Drawing Step

The drawing step included in the method for producing a glass strand of the present invention is a drawing step of drawing raw filaments composed of a glass composition containing SiO₂ in a compositional amount of 90% by mass or more into glass fibers under conditions of a melting temperature of 1,500 to 3,500°C and a tension of 0.1 to 1.0 cN per filament. The glass fibers produced in the drawing step are obtained by melting and drawing the raw filaments composed of a glass composition described above. The glass composition described above contains SiO₂ in a compositional amount of 90% by mass or more. The content is preferably 95% by mass to 100% by mass, and examples of the glass composition include naturally occurring quartz with few impurities and synthetic quartz using silicon tetrachloride as a raw material. When the SiO₂ compositional amount is less than 90% by mass, electrical characteristics such as dielectric tangent are deteriorated due to other components.

In particular, it is preferable to use quartz glass containing SiO₂ in a compositional amount of 99% by mass or more as the glass composition.

In order to prevent malfunction due to radiation, it is more preferable that the content of an impurity such as U or Th in the above glass composition is 0.1 ppb or less. By using such a glass composition, it is possible to obtain glass cloth in which the contents of U and Th are each 0.1 ppb or less. The concentrations of the above impurities can be measured by methods such as atomic absorption spectrophotometry or inductively coupled plasma (ICP) emission spectroscopy.

The raw filaments described above may be either filamentous or rod-shaped, and their diameter is preferably 100 to 500 µm, and more preferably 200 to 400 µm.

As conditions for drawing the above raw filaments into glass fibers, the melting temperature is 1,500 to 3,500°C, preferably 1,700 to 3,300°C, more preferably 2,000 to 3,000°C, and still more preferably 2,200 to 2,800°C. When the measured temperature of the molten portion is lower than 1,500°C, the viscosity during melting is high, the tension during drawing becomes high, and the strength ratio of tensile strength decreases due to winding tightening. This decrease in tensile strength is particularly noticeable at the end part of winding of the glass yarn (the beginning part of winding in the drawing step). Also, when the temperature is higher than 3,500°C, the glass composition is excessively melted, causing thread breakage and preventing stable drawing. Note that, in the present specification, the melting temperature refers to the temperature measured at the molten portion using a two-color temperature measurement system (Thermera manufactured by Nobby Tech. Ltd.) with an exposure time of 8 seconds and a frame rate of 4.99 fps.

Also, the tension during drawing into glass fibers described above is 0.1 to 1.0 cN per filament, preferably 0.1 to 0.7 cN per filament, and more preferably 0.1 to 0.5 cN per filament. When the tension is less than 0.1 cN per filament, stable drawing is difficult, and the winding becomes loose, making the glass fibers prone to detachment or other problems and causing thread breakage during the thread twisting step. When the tension is more than 1.0 cN per filament, winding tightening occurs, reducing the strength ratio of tensile strength. Note that, in the present invention, the tension of the glass fibers is measured on the glass strand during winding with a digital tension meter (ZEF-100 manufactured by Hans Schmidt & Co. GmbH), and is calculated by dividing by the number of filaments bundled.

It is preferable to set a method for melting the above raw filaments used in the above drawing step to a method using any one selected from a burner flame, laser light, and an electric furnace.

Examples of the fuel gas for the burner flame include methane, propane, propylene, ethylene, acetylene, and hydrogen gas. From the viewpoint of carbon neutrality, hydrogen gas is preferable.

In the case where hydrogen gas is used as the above fuel gas, the above fuel gas is preferably a mixed gas of hydrogen, oxygen, and nitrogen, and more preferably a fuel gas in which the mixing ratio thereof is hydrogen:oxygen = 1:1 to 3:1 and nitrogen is 1 or less based on 1 of oxygen.

Examples of a method for mixing gases in the above mixed gas include a nozzle-mix type in which the gases are mixed at the burner tip and a premix type in which the gases are mixed before the burner nozzle, with the premix type, which can make the flame temperature uniform, being preferable.

The laser source for the above laser light is not particularly restricted as long as it is a laser source with a wavelength of 0.7 to 100 µm, and examples thereof include a laser source selected from carbonic acid gas type, YAG type, Nd/glass, Nd/vanadate, diode, fiber, disk, HeCd, copper vapor laser, iodine laser, argon laser, krypton laser, and chemical laser.

Among these, in particular, a carbonic acid gas laser with a wavelength of 10.6 µm, and a Nd-doped YAG laser or YVO laser with a wavelength of 1.06 µm are preferable, with the carbonic acid gas laser being more preferable because it can heat glass with high output in a short time.

The material of a heating element of the above electric furnace is preferably one selected from platinum, molybdenum, tantalum, tungsten, molybdenum disilicide, lanthanum chromite, and carbon graphite. Among these, carbon graphite is still more preferable because it can heat glass in a short time.

The method for drawing into glass fibers of the present invention is not particularly limited. Examples thereof include a rod method in which raw filaments of a glass composition are heated and melted while one end is pulled and wound, as well as a direct melt method and a marble melt method in which a glass composition is melted in a crucible and allowed to flow out through a large number of small holes provided at the bottom for winding. Among these, in the case where the above glass composition is a quartz glass composition with a high melting temperature, the rod method is preferable.

The drawing ratio into the glass fibers is preferably 50 to 30,000 times, and more preferably 250 to 20,000 times.

### (2) Bundling Step

The bundling step included in the method for producing a glass strand of the present invention is a step of bundling 30 to 400 of the glass fibers obtained in the drawing step to produce a glass strand.

The number of the glass fibers, obtained in the above drawing step, to be bundled is 30 to 400. With such a number, it is possible to reduce the number of or eliminate thread combination, thereby improving productivity.

When bundling the above glass fibers, it is preferable to use a bundling agent.

The above bundling agent is preferably a bundling agent that contains one or more selected from starch, urethane resin, and vinyl acetate resin, and may contain other components as necessary.

Examples of the above starch include starch derived from corn, wheat, rice, potato, sweet potato, tapioca, sago, kudzu, bracken, lotus root, and beans. Among these, corn starch and rice starch having small particle diameters are preferable, rice starch is more preferable, and nonglutinous rice starch is still more preferable. The above starch may be used alone or in combination of two or more types. Also, the above starch may be either unprocessed starch or processed starch. The processed starch is not particularly limited, and examples thereof include acetylated distarch adipate, acetylated distarch phosphate, acetylated oxidized starch, starch acetate, oxidized starch, hydroxypropyl starch, hydroxypropyl distarch phosphate, phosphated distarch phosphate, distarch phosphate, pregelatinized starch, and heat-moisture-treated starch.

The above urethane resin is not particularly limited as long as it is a reaction product of a polyester or a polyether with an isocyanate. Examples of the above polyester include esterification products of adipic acid or sebacic acid with ethylene glycol, diethylene glycol, propylene glycol, butylene glycol, 1,3-butanediol, trimethylolpropane, or the like. Examples of the above polyether include polypropylene glycol and polyethylene glycol. Examples of the above isocyanate include hexamethylene diisocyanate. These may be used alone or in combination of two or more types.

Examples of the above vinyl acetate resin include anion-based vinyl acetate, cation-based vinyl acetate, and nonion-based vinyl acetate. Among these, the cation-based vinyl acetate is preferable.

Examples of the above other components include a lubricant, an antistatic agent, an emulsifier, a softener, a film-forming agent, a preservative, and a silane coupling agent. In addition, an alcohol such as methanol, ethanol, or isopropanol, or another organic solvent may be added in a small amount.

Examples of the above lubricant include beef tallow, modified silicone oil, soybean oil, coconut oil, rapeseed oil, palm oil, sesame oil, paraffin, and ester condensation products of higher saturated fatty acids and higher saturated alcohols. The animal and vegetable oils may be hydrogenated hardened oils.

Examples of the above antistatic agent include ionic antistatic agents such as anion-based surfactants, cation-based surfactants, and amphoteric surfactants, nonionic antistatic agents, ionic liquids, conductive polymers, and carbon particles. Among these, ionic antistatic agents are preferable, and cation-based surfactants are more preferable. Examples of the cation-based surfactants include tertiary amines and quaternary ammonium salts. Among these, quaternary ammonium salts with high water solubility are still more preferable.

Examples of the above emulsifier include anionic surfactants, cationic surfactants, amphoteric surfactants, and nonionic surfactants.

Examples of the above softener include condensation products of amide, imidazoline, tetraethylenepentamine, and polyethyleneimine with stearic acid.

Examples of the above film-forming agent include polyethylene glycol and polyvinyl, in addition to the above-mentioned starch, urethane resin, and vinyl acetate resin.

Examples of the above preservative include formalin and tributyltin oxide.

Examples of the above silane coupling agent include trimethylmethoxysilane, trimethylethoxysilane, dimethyldimethoxysilane, dimethyldiethoxysilane, methylphenyldimethoxysilane, methylphenyldiethoxysilane, diphenyldimethoxysilane, diphenyldiethoxysilane, trimethoxysilane, triethoxysilane, methyltrimethoxysilane, methyltriethoxysilane, phenyltrimethoxysilane, phenyltriethoxysilane, phenylmethylvinylethoxysilane, naphthyltrimethoxysilane, naphthyltriethoxysilane, 1,4-bis(methoxydimethylsilyl)benzene, tetramethoxysilane, tetraethoxysilane, n-propyltriethoxysilane, hexyltrimethoxysilane, octyltriethoxysilane, decyltrimethoxysilane, 1,6-bis(trimethoxysilyl)hexane, vinyltrimethoxysilane, vinyltriethoxysilane, p-styryltrimethoxysilane, 3-aminopropyltrimethoxysilane, 3-glycidoxypropyltrimethoxysilane, 3-glycidoxypropylmethyldimethoxysilane, 3-glycidoxypropyltriethoxysilane, 3-glycidoxypropylmethyldiethoxysilane, 2-(3,4-epoxycyclohexyl)ethyltrimethoxysilane, 2-(3,4-epoxycyclohexyl)ethylmethyldimethoxysilane, 3-methacryloxypropyltrimethoxysilane, 3-methacryloxypropylmethyldimethoxysilane, 3-methacryloxypropyltriethoxysilane, 3-methacryloxypropylmethyldiethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, N-(2-aminoethyl)-3-aminopropylmethyldiethoxysilane, N-phenyl-3-aminopropyltrimethoxysilane, N-(vinylbenzyl) -2-aminoethyl-3-aminopropyltrimethoxysilane and a hydrochloride salt thereof, N-(vinylbenzyl)-2-aminoethyl-3-aminopropylmethyldimethoxysilane and a hydrochloride salt thereof, 3-isocyanatopropyltriethoxysilane, tris-(trimethoxysilylpropyl) isocyanurate, 3-ureidopropyltriethoxysilane, 3-chloropropyltrimethoxysilane, 3-mercaptopropyltrimethoxysilane, and 3-mercaptopropylmethyldimethoxysilane.

The method of applying the above bundling agent to the glass fibers is not particularly limited, and examples thereof include spray coating such as spraying, applicator coating of roll type or belt type, and immersion coating.

### [Method for Producing Glass Yarn]

### (3) Twisting Step

The method for producing a glass yarn preferably includes a twisting step of using a glass strand produced by the method described above, wherein the number of twists is set to 0.1 to 5 twists per 25 mm.

The glass strand obtained in the above bundling step is twisted using a thread twisting machine to produce a glass yarn. The number of twists of the glass yarn is preferably 0.1 to 5 twists, and more preferably 0.5 to 1.0 twists, per 25 mm of the glass strand. When the number of twists is small, after forming glass cloth, the thickness of the cloth can be easily reduced in the fiber opening step and the air permeability can also be easily lowered. Also, when the number of twists is large, the convergence of the yarn increases, and breakage and fuzzing during weaving are less likely to occur. When the number of twists is 0.1 or more, breakage and fuzzing during weaving are unlikely to occur, and when the number of twists is 5 or less, the force of the yarn to return in the direction opposite to the twisting direction is suppressed, which has the advantage that adjacent yarns do not become entangled during warping, thereby enabling stable warping.

Note that, in the present specification, the above bundling step and the above twisting step are sometimes collectively referred to as thread twisting step.

It is preferable that the method for producing a glass yarn described above also includes, after the twisting step, a winding step of winding the obtained glass yarn onto a bobbin, in which the length of the glass yarn is 100 km or more. Even with such a long-length glass yarn, the production method of the present invention makes it possible to obtain a glass yarn with stable quality at the beginning and end of winding. Specifically, when the tensile strength at the beginning of winding and the tensile strength at the end of winding in the length direction of the glass yarn are defined as Ts and Te, respectively, Te/Ts is preferably in the range of 0.5 to 2.0, and more preferably in the range of 0.7 to 1.3. Within this range, the quality of the glass yarn wound onto the bobbin can be considered uniform throughout.

### EXAMPLE

Hereinafter, the present invention will be specifically described with reference to Examples and Comparative Examples, but the present invention is not limited to the following Examples.

The measurements in Examples were carried out by the following methods.

### [Melting Temperature]

The measurement was performed using a two-color temperature measurement system (Thermera manufactured by Nobby Tech. Ltd.) with an exposure time of 8 seconds and a frame rate of 4.99 fps.

### [Tension]

The tension of the glass fibers was calculated by measuring the passage of glass strand horizontally during winding of the glass strand with a digital tension meter (ZEF-100 manufactured by Hans Schmidt & Co. GmbH) and dividing by the number of filaments bundled.

### [Tensile Strength]

The measurement was performed in accordance with the description of JIS R 3420:2013, Section 7.4.3, using Autograph (AGS-50NX manufactured by Shimadzu Corporation). The tensile strength at the beginning of winding and the tensile strength at the end of winding in the length direction of the glass yarn were defined as Ts and Te, respectively, and the variation was evaluated using Te/Ts.

### [Example 1]

A bundling agent for glass fibers, which was composed of 3.0% by mass of starch, 0.5% by mass of beef tallow, 0.1% by mass of an emulsifier, and the balance of water, was prepared. Using an oxyhydrogen flame in which hydrogen, oxygen, and nitrogen had been premixed at a ratio of 2.6:1:0.05, raw filaments with a diameter of 230 µm, composed of a quartz glass ingot containing 99.9% by mass of SiO₂, were subjected to a melting temperature of 2522°C. The raw filaments were drawn at a drawing ratio of 3306 times, determined from the speed ratio between the supply speed and the glass fiber winding speed, thereby fabricating glass fibers with an average diameter of 4 µm. The above bundling agent for glass fibers was applied to these glass fibers using an applicator, and then 100 filaments were bundled to form a glass strand. By applying 0.6 twists per 25 mm, a glass yarn was obtained. The tension during drawing was 0.45 cN per filament, and the ratio of tensile strength was Te/Ts = 0.9.

### [Example 2]

The same bundling agent for glass fibers and raw filaments as in Example 1 were used. The melting temperature was set to 2688°C by the irradiation with carbonic acid gas laser with a laser diameter of 3.5 mm, a wavelength of 10.6 µm, and an output of 22.2 W. The raw filaments were drawn at a drawing ratio of 3306 times, determined from the speed ratio between the supply speed and the glass fiber winding speed, thereby fabricating glass fibers with an average diameter of 4 µm. The above bundling agent for glass fibers was applied to these glass fibers using an applicator, and then 100 filaments were bundled to form a glass strand. By applying 0.6 twists per 25 mm, a glass yarn was obtained. The tension during drawing was 0.40 cN per filament, and the ratio of tensile strength was Te/Ts = 1.0.

### [Example 3]

The same bundling agent for glass fibers and raw filaments as in Example 1 were used. The melting temperature was set to 2437°C by heating in an electric furnace with a heating element composed of carbon graphite. The raw filaments were drawn at a drawing ratio of 3306 times, determined from the speed ratio between the supply speed and the glass fiber winding speed, thereby fabricating glass fibers with an average diameter of 4 µm. The above bundling agent for glass fibers was applied to these glass fibers using an applicator, and then 100 filaments were bundled to form a glass strand. By applying 0.6 twists per 25 mm, a glass yarn was obtained. The tension during drawing was 0.50 cN per filament, and the ratio of tensile strength was Te/Ts = 0.8.

### [Example 4]

The same bundling agent for glass fibers and raw filaments as in Example 1 were used. The melting temperature was set to 2563°C using an oxyhydrogen flame in which hydrogen, oxygen, and nitrogen had been premixed at a ratio of 2.6:1:0.05. The raw filaments were drawn at a drawing ratio of 529 times, determined from the speed ratio between the supply speed and the glass fiber winding speed, thereby fabricating glass fibers with an average diameter of 10 µm. The above bundling agent for glass fibers was applied to these glass fibers using an applicator, and then 200 filaments were bundled to form a glass strand. By applying 0.6 twists per 25 mm, a glass yarn was obtained. The tension during drawing was 0.18 cN per filament, and the ratio of tensile strength was Te/Ts = 1.0.

### [Example 5]

The same bundling agent for glass fibers and raw filaments as in Example 1 were used. The melting temperature was set to 2799°C by the irradiation with carbonic acid gas laser with a laser diameter of 3.5 mm, a wavelength of 10.6 µm, and an output of 22.2 W. The raw filaments were drawn at a drawing ratio of 529 times, determined from the speed ratio between the supply speed and the glass fiber winding speed, thereby fabricating glass fibers with an average diameter of 10 µm. The above bundling agent for glass fibers was applied to these glass fibers using an applicator, and then 200 filaments were bundled to form a glass strand. By applying 0.6 twists per 25 mm, a glass yarn was obtained. The tension during drawing was 0.16 cN per filament, and the ratio of tensile strength was Te/Ts = 1.0.

### [Example 6]

The same bundling agent for glass fibers and raw filaments as in Example 1 were used. The melting temperature was set to 2484°C by heating in an electric furnace with a heating element composed of carbon graphite. The raw filaments were drawn at a drawing ratio of 529 times, determined from the speed ratio between the supply speed and the glass fiber winding speed, thereby fabricating glass fibers with an average diameter of 10 µm. The above bundling agent for glass fibers was applied to these glass fibers using an applicator, and then 200 filaments were bundled to form a glass strand. By applying 0.6 twists per 25 mm, a glass yarn was obtained. The tension during drawing was 0.30 cN per filament, and the ratio of tensile strength was Te/Ts = 1.0.

### [Comparative Example 1]

The same bundling agent for glass fibers and raw filaments as in Example 1 were used. The melting temperature was set to 3790°C by the irradiation with carbonic acid gas laser with a laser diameter of 3.5 mm, a wavelength of 10.6 µm, and an output of 34 W. The raw filaments were drawn at a drawing ratio of 3306 times, determined from the speed ratio between the supply speed and the glass fiber winding speed, thereby fabricating glass fibers with an average diameter of 4 µm. The above bundling agent for glass fibers was applied to these glass fibers using an applicator, and then 100 filaments were bundled to form a glass strand. By applying 0.6 twists per 25 mm, a glass yarn was obtained. The tension during drawing was 0.03 cN per filament, and the ratio of tensile strength was Te/Ts = 1.0.

### [Comparative Example 2]

The same bundling agent for glass fibers and raw filaments as in Example 1 were used. The melting temperature was set to 1400°C by heating in an electric furnace with a heating element composed of carbon graphite. The raw filaments were drawn at a drawing ratio of 529 times, determined from the speed ratio between the supply speed and the glass fiber winding speed, thereby fabricating glass fibers with an average diameter of 10 µm. The above bundling agent for glass fibers was applied to these glass fibers using an applicator, and then 200 filaments were bundled to form a glass strand. By applying 0.6 twists per 25 mm, a glass yarn was obtained. The tension during drawing was 2.00 cN per filament, and the ratio of tensile strength was Te/Ts = 0.3.

### [Comparative Example 3]

The same bundling agent for glass fibers and raw filaments as in Example 1 were used. The melting temperature was set to 1700°C by heating in an electric furnace with a heating element composed of carbon graphite. The raw filaments were drawn at a drawing ratio of 529 times, determined from the speed ratio between the supply speed and the glass fiber winding speed, thereby fabricating glass fibers with an average diameter of 10 µm. The above bundling agent for glass fibers was applied to these glass fibers using an applicator, and then 200 filaments were bundled to form a glass strand. By applying 0.6 twists per 25 mm, a glass yarn was obtained. The tension during drawing was 1.40 cN per filament, and the ratio of tensile strength was Te/Ts = 0.4.

For the glass strands and glass yarns obtained in the respective Examples and Comparative Examples, the following evaluations were carried out. The results are shown in Table 1.

### 1. Drawability

When drawing the raw filaments into glass fibers with a length of 100 km, those in which thread breakage occurred in 4 lots or less out of 10 lots were rated as "Good", and those in which thread breakage occurred in 5 lots or more were rated as "Poor".

### 2. Thread Breakage during Thread Twisting Step

After bundling to the number described in each of the above Examples and Comparative Examples, the glass strand with a length of 100 km was subjected to thread twisting under the above conditions to obtain the glass yarn, and those in which no thread breakage occurred were rated as "Good", and those in which thread breakage occurred during the process were rated as "Poor".

### 3. Appearance Inspection of Glass Yarn

Using a magnifying glass, the appearance of the surface of the glass yarn wound onto a bobbin was observed by illuminating from the side of the bobbin, and the number of surface fuzz was visually counted.

**[Table 1]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Fiber diameter [µm] | 4 | 4 | 4 | 10 | 10 | 10 | 4 | 10 | 10 |
| Number of filaments | 100 | 100 | 100 | 200 | 200 | 200 | 100 | 200 | 200 |
| Melting method | Burner flame | Laser light | Electric furnace | Burner flame | Laser light | Electric furnace | Laser light | Electric furnace | Electric furnace |
| Melting temperature [°C] | 2522 | 2688 | 2437 | 2563 | 2799 | 2484 | 3790 | 1400 | 1700 |
| Tension [cN per filament] | 0.45 | 0.40 | 0.50 | 0.18 | 0.16 | 0.30 | 0.03 | 2.00 | 1.40 |
| Ratio of tensile strength | 0.9 | 1.0 | 0.8 | 1.0 | 1.0 | 1.0 | 1.0 | 0.3 | 0.4 |
| Draw ability | Good | Good | Good | Good | Good | Good | Poor | Poor | Good |
| Thread breakage during thread twisting step | Good | Good | Good | Good | Good | Good | Good | Poor | Poor |
| Appearance inspection of glass yarn | 1 | 1 | 2 | 0 | 1 | 2 | 1 | 10 | 6 |

Based on Table 1, the evaluation results for Examples 1 to 6, which used the glass strands and glass yarns produced by the method of the present invention, were all good. On the other hand, for Comparative Examples 1 to 3, which were produced under conditions not in accordance with the conditions of the production method of the present invention, the following was observed: in Comparative Example 1, thread breakage frequently occurred during drawing into glass fibers; in Comparative Example 2, thread breakage frequently occurred when forming the glass yarn, the appearance inspection revealed a large number of surface fuzz, and the ratio of tensile strength also decreased significantly; and in Comparative Example 3, thread breakage frequently occurred when forming the glass yarn, and the appearance inspection revealed a large number of surface fuzz. In other words, it can be seen that drawing under conditions of a melting temperature of 1,500 to 3,500°C and a tension of 0.1 to 1.0 cN per filament can produce a glass strand in which the occurrence of thread breakage is reduced, and using a glass strand produced by the above method can obtain a glass yarn in which a variation in quality is small even in a long-length glass yarn of 100 km or more.

The present description includes the following embodiments.
[1] A method for producing a glass strand, the method comprising:
   (1) a drawing step of drawing raw filaments composed of a glass composition containing SiO₂ in a compositional amount of 90% by mass or more into glass fibers under conditions of a melting temperature of 1,500 to 3,500°C and a tension of 0.1 to 1.0 cN per filament; and
   (2) a bundling step of bundling 30 to 400 of the glass fibers obtained in the drawing step to produce a glass strand.
[2] The method for producing a glass strand according to [1], wherein quartz glass containing SiO₂ in a compositional amount of 99% by mass or more is used as the glass composition.
[3] The method for producing a glass strand according to [1] or [2], wherein a method for melting the raw filaments composed of a glass composition is a method using any one selected from a burner flame, laser light, and an electric furnace.
[4] The method for producing a glass strand according to [3], wherein, as a fuel gas for the burner flame, a mixed gas of hydrogen, oxygen, and nitrogen is used in which a mixing ratio of the mixed gas is hydrogen:oxygen = 1:1 to 3:1 and nitrogen is 1 or less based on 1 of oxygen.
[5] The method for producing a glass strand according to [3], wherein, as a laser source for the laser light, one selected from carbonic acid gas type, YAG type, Nd/glass, Nd/vanadate, diode, fiber, disk, HeCd, copper vapor laser, iodine laser, argon laser, krypton laser, and chemical laser is used.
[6] The method for producing a glass strand according to [3], wherein, as a material of a heating element of the electric furnace, one selected from platinum, molybdenum, tantalum, tungsten, molybdenum disilicide, lanthanum chromite, and carbon graphite is used.
[7] A method for producing a glass yarn, the method comprising a twisting step of using a glass strand produced by the method according to any one of [1] to [6], wherein the number of twists is set to 0.1 to 5 twists per 25 mm.
[8] The method for producing a glass yarn according to [7], wherein the method comprises a winding step of winding the glass yarn obtained in the twisting step onto a bobbin, wherein a length of the glass yarn is set to 100 km or more.

Note that the present invention is not limited to the embodiments described above. The embodiments described above are merely illustrations, and any embodiments having substantially the same configuration as and providing similar effects to the technical concept described in the claims of the present invention are encompassed in the technical scope of the present invention.

## Claims

1. A method for producing a glass strand, the method comprising:
(1) a drawing step of drawing raw filaments composed of a glass composition containing SiO₂ in a compositional amount of 90% by mass or more into glass fibers under conditions of a melting temperature of 1,500 to 3,500°C and a tension of 0.1 to 1.0 cN per filament; and
(2) a bundling step of bundling 30 to 400 of the glass fibers obtained in the drawing step to produce a glass strand.

2. The method for producing a glass strand according to claim 1, wherein quartz glass containing SiO₂ in a compositional amount of 99% by mass or more is used as the glass composition.

3. The method for producing a glass strand according to claim 1 or 2, wherein a method for melting the raw filaments composed of a glass composition is a method using any one selected from a burner flame, laser light, and an electric furnace.

4. The method for producing a glass strand according to claim 3, wherein, as a fuel gas for the burner flame, a mixed gas of hydrogen, oxygen, and nitrogen is used in which a mixing ratio of the mixed gas is hydrogen:oxygen = 1:1 to 3:1 and nitrogen is 1 or less based on 1 of oxygen.

5. The method for producing a glass strand according to claim 3, wherein, as a laser source for the laser light, one selected from carbonic acid gas type, YAG type, Nd/glass, Nd/vanadate, diode, fiber, disk, HeCd, copper vapor laser, iodine laser, argon laser, krypton laser, and chemical laser is used.

6. The method for producing a glass strand according to claim 3, wherein, as a material of a heating element of the electric furnace, one selected from platinum, molybdenum, tantalum, tungsten, molybdenum disilicide, lanthanum chromite, and carbon graphite is used.

7. A method for producing a glass yarn, the method comprising a twisting step of using a glass strand produced by the method according to any one of claims 1 to 6, wherein the number of twists is set to 0.1 to 5 twists per 25 mm.

8. The method for producing a glass yarn according to claim 7, wherein the method comprises a winding step of winding the glass yarn obtained in the twisting step onto a bobbin, wherein a length of the glass yarn is set to 100 km or more.
